# EUROPEAN PATENT APPLICATION

(11) **EP 4 675 529 A1**
(43) Date of publication of application: **07.01.2026**
(21) Application number: 25186819.6
(22) Date of filing: 02.07.2025
(51) Int. Cl.: G06Q 10/08, B65G 1/137, G06Q 10/087, B25J 5/00, B65G 61/00

(54) **SYSTEM AND METHOD OF WAREHOUSE ORCHESTRATION FOR OPTIMIZED INVENTORY PICKING AND FULFILLMENT**

(30) Priority: 02.07.2024 US 202418761997
(71) Applicant: Grey Orange Inc., Roswell, GA 30076 (US)
(72) Inventor: Tiwary, Sumit, 273014 Gorakhpur (IN); Das, Sarbajit, 700047 Kolkata (IN); Sharma, Amit, 122001 Gurgaon (IN); Yadav, Jale, 303108 Kotputli-Behror (IN)
(74) Representative: Nirwan, Prajwal

(57) **Abstract**

A system of warehouse orchestration for inventory picking and fulfilment comprising a controller configured to receive order information from warehouse management system (WMS), allocate and distribute a plurality of orders across a plurality of virtual pick zones based on real-time or near real-time demand, pick capacity and received order information. Cause first autonomous mobile robot to move to first virtual pick zone of plurality of virtual pick zones, communicate guidance instruction to first operator to guide first operator to be available at first virtual pick zone and determine pallet loading pattern indicative of distribution of plurality of inventory items in one or more cases and stacking of the one or more cases in one or more layers based on a set of criteria and communicate pick instruction to first operator to pick one or more inventory items and place onto the pallet of the first autonomous mobile robot.

## Description

### FIELD

Various embodiments of the disclosure relate to warehouse automation technology. More specifically, various embodiments of the disclosure relate to a system and a method of warehouse orchestration for inventory picking and fulfillment.

### BACKGROUND

Advancements in warehouse management automation technologies have pushed the development of warehouse management systems for automated inventory picking, fulfilling orders, sortation, and putting away different types of inventory items for multi-line orders in a warehouse. However, many warehouse management systems still rely on manual processes, which are time-consuming, labor-intensive, and prone to errors. As warehouses grow in size, the volume of orders increases, along with the complexity of managing warehouse operations, which includes tracking inventory levels, processing orders, and locating goods. Additionally, existing warehouse management systems are not adequately equipped to address issues related to real-time demand and pick capacity variations, leading to bottlenecks and reduced operational efficiency.

Further limitations and disadvantages of conventional and traditional approaches will become apparent to one of skill in the art, through the comparison of described systems with some aspects of the present disclosure, as set forth in the remainder of the present application and with reference to the drawings.

### SUMMARY

A system and a method for warehouse orchestration for inventory picking and fulfillment, substantially as shown in, and/or described in connection with, at least one of the figures, as set forth more completely in the claims.

These and other features and advantages of the present disclosure may be appreciated from a review of the following detailed description of the present disclosure, along with the accompanying figures in which like reference numerals refer to like parts throughout.

### BRIEF DESCRIPTION OF THE DRAWINGS

FIG. 1A is a block diagram illustrating a system for warehouse orchestration for inventory picking and fulfillment, in accordance with another embodiment of the present disclosure;
FIG. 1B is a block diagram that illustrates various exemplary components of a system, in accordance with an embodiment of the present disclosure;
FIG. 2 is a diagram that illustrates a warehouse including a plurality of operators and a plurality of virtual pick zones, in accordance with an embodiment of the present disclosure;
FIG. 3 is a diagram that depicts an exemplary user interface (UI) of a wearable device illustrating real-time or near real-time interaction of an operator with a controller of a system warehouse orchestration for inventory picking and fulfillment, in accordance with an embodiment of the present disclosure;
FIG. 4A and FIG. 4B illustrates an autonomous mobile robot equipped with a user interface (UI) screen and control mechanisms, in accordance with an embodiment of the present disclosure;
FIGs. 5A, 5B, and 5C are diagrams that illustrate a process of layering and palletization in a warehouse management system for optimized inventory picking and fulfillment, in accordance with an embodiment of the present disclosure;
FIGs. 6A, 6B, and 6C are diagrams that illustrate different configurations of items loaded on an autonomous mobile robot based on center of mass, in accordance with an embodiment of the present disclosure; and
FIG. 7 is a flowchart of a method of warehouse orchestration for inventory picking and fulfillment, in accordance with an embodiment of the present disclosure.

### DETAILED DESCRIPTION

The following described implementations may be found in a disclosed system and method for warehouse orchestration for inventory picking and fulfillment. The disclosed system provides a solution to optimize warehouse orchestration operations, specifically focusing on inventory picking and fulfillment processes based on real-time or near real-time demand and capacity, guidance for operators via wearable devices, and optimization of pallet loading patterns based on specified criteria. Moreover, the disclosed system enhances operational efficiency by minimizing travel distances, balancing workloads, and improving overall throughput in warehouse environments. Additionally, the disclosed system enhances the productivity of the warehouses by enabling hands-free operation, fitting into existing infrastructure, and reducing cycle times through optimized real-time order allocation, autonomous robot coordination, and efficient operator guidance.

In the following description, reference is made to the accompanying drawings, which form a part hereof, and which are shown, by way of illustration, various embodiments of the present disclosure.

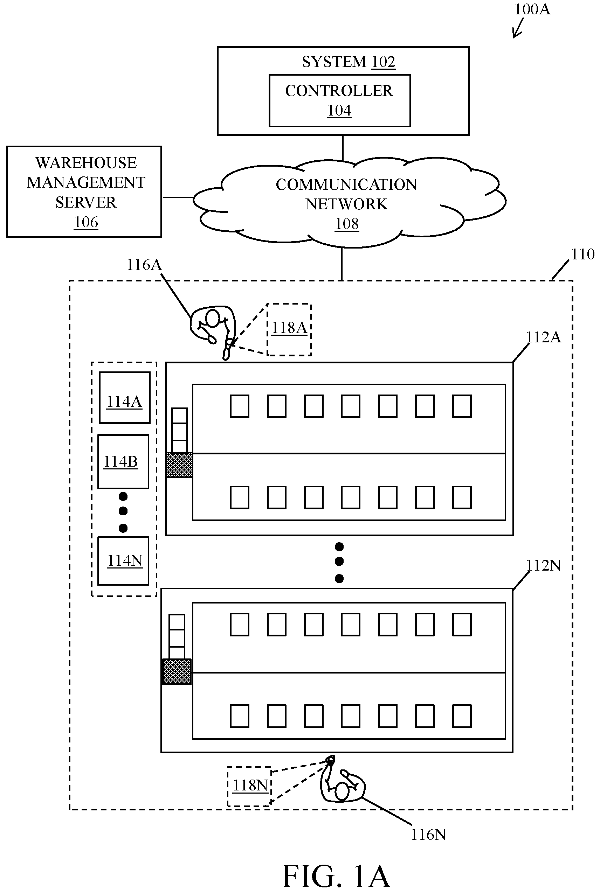

FIG. 1A is a block diagram illustrating a system for warehouse orchestration for inventory picking and fulfillment, in accordance with another embodiment of the present disclosure. With reference to FIG. 1A, there is shown a block diagram **100A** of a system **102** of warehouse management for warehouse orchestration for inventory picking and fulfillment that includes a controller **104,** a warehouse management system **106,** a communication network **108,** and a warehouse **110.**

The system **102** for warehouse orchestration system incorporates the plurality of autonomous mobile robots with extended pallet capabilities that allows each of the plurality of autonomous mobile robots to carry up to the plurality of inventory items (e.g., the plurality of inventory items up to **2200** pounds) and can operate for approximately nine hours on a single battery charge. The wearable devices that are worn by each of the plurality of operators are efficient for item tracking. The system **102** further employs a detailed operational flow, starting with operator login including server checks for logged-in operators and fulfillable missions to balance workload across zones. Furthermore, the task assignment logic is used to provide a configurable estimated time of arrival (ETA) and distance thresholds, with special handling for the plurality of autonomous mobile robots. The system **102** is configured to handle exceptions such as out-of-stock situations. Task allocation is optimized using detailed cost factors including the bot distance cost, picking cost, operator travel cost within zones, and overall zone current cost, with specific formulas for each. These enhancements result in significant productivity increases, enable hands-free operation, seamlessly integrate with existing infrastructure, and reduce overall cycle times in the warehouse **110.**

The controller **104** refers to a computational element (or a warehouse execution system), which is configured to receive an order information from the warehouse management system **106** and execute the domain-specific functions, such as workflow orchestration, resource allocation and optimization, order processing, multi-agent orchestration, inventory orchestration, task allocation, order distribution, fulfillment of business logic, workforce forecasting, real-time visualization and analytics, and the like. The controller **104** may refer to one or more individual controllers, processing devices, and various elements associated with a processing device that may be shared by other processing devices. In an implementation, the controller **104** (or the warehouse execution system) is located outside the warehouse management system **106** and integrated with an application programming interface (API). Examples of the controller **104** may include but are not limited to, a hardware processor, a digital signal processor (DSP), a microprocessor, a microcontroller, a complex instruction set computing (CISC) processor, an application-specific integrated circuit (ASIC) processor, a reduced instruction set (RISC) processor, a very long instruction word (VLIW) processor, a state machine, a data processing unit, a graphics processing unit (GPU), and other processors or control circuitry.

The warehouse management system **106** is configured to supervise and coordinate different tasks within the warehouse **110,** such as inventory management at the warehouse level, work forecasting, applying business logic, and the like. In an implementation, the warehouse management system **106** is a specialized system configured to handle multiple functionalities involved in the day-to-day operations of the warehouse **110.**

The communication network **108** includes a medium (e.g., a communication channel) through which the controller **104** (or the warehouse execution system) communicates with the different components of the warehouse **110.** The communication network **108** may be wired or wireless. Examples of the communication network **108** may include, but are not limited to, Internet, a Local Area Network (LAN), a wireless personal area network (WPAN), a Wireless Local Area Network (WLAN), a wireless wide area network (WWAN), a cloud network, a Long-Term Evolution (LTE) network, a Metropolitan Area Network (MAN), and/or the Internet.

The warehouse **110** refers to a facility where the outlined operations, such as order processing, inventory management, and automation integration, take place. Furthermore, the warehouse **110** is configured to receive, store, and distribute a plurality of inventory items. The warehouse **110** includes a plurality of virtual pick zones, such as a first virtual pick zone **112A** up to a nth virtual pick zone **112N,** and a plurality of operators, such as a first operator **116A** up to nth operator **116N** along with wearable devices worn by the plurality of operators. For example, the first operator **116A** wears the first wearable device **118A.** Similarly, the nth operator **116N** wears the nth wearable device **118N.** Furthermore, the warehouse **110** includes a plurality of autonomous robots, such as the first autonomous mobile robot **114A,** a second autonomous mobile robot **114B,** up to nth autonomous mobile robot **114N.**

There is provided the system **102** of warehouse orchestration for inventory picking and fulfillment. The system **102** is configured to provide a real-time or near real-time order processing and distribution with efficient allocation and management of orders across the plurality of virtual pick zones. Furthermore, the system **102** is configured to establish an improved and reliable coordination of the plurality of autonomous mobile robots and human operators to enhance the operational efficiency of the warehouse **110** along with safe and efficient stacking.

In operation, the system **102** includes the controller **104** configured to receive order information from the warehouse management system (WMS) **106.** The order information received by the controller **104** from the warehouse management system **106** should include information associated with the order, such as order ID, customer information, product details, quantity, inventory location, priority level, delivery date, handling instructions, and the like. The controller **104** is configured to receive the order information from the warehouse management system **106** in order to ensure that the plurality of orders that are to be fulfilled through the warehouse **110** can be fulfilled accurately and efficiently.

Furthermore, the controller **104** is configured to allocate and distribute a plurality of orders across the plurality of virtual pick zones in the warehouse **110** based on real-time or near real-time demand and pick capacity and the received order information. The controller **104** is configured to use real-time or near real-time demand data, pick capacity, and the received order information to dynamically allocate and distribute orders to different virtual pick zones within the warehouse **110.** For example, the controller **104** is configured to allocate and distribute the plurality of orders to the first virtual pick zone **112A** in the warehouse **110.** Similarly, the controller **104** is configured to allocate and distribute the plurality of orders across the Nth virtual pick zone **112N.** In an implementation, the controller **104** is configured to group orders altogether in order to provide the minimum number of consecutive aisles to travel to ensure picker productivity improvement. As a result, the controller **104** is configured to optimize the workflow, reducing bottlenecks, and improving the overall operational efficiency of the warehouse.

Furthermore, the controller **104** is configured to cause the first autonomous mobile robot **114A** from the plurality of plurality of autonomous mobile robots to move to the first virtual pick zone **112A** of the plurality of virtual pick zones. The controller **104** is configured to send instructions to the first autonomous mobile robot **114A** from the plurality of autonomous robots to navigate to the first virtual pick zone **112A.** Moreover, such instructions are based on real-time data and the overall distribution of tasks across the warehouse **110.** The system **102** is configured to utilize sensors, location data, and pre-defined pathways within the warehouse **110** to accurately guide the plurality of autonomous mobile robots, such as the first autonomous mobile robot **114A,** the second autonomous mobile robot **114B,** and the like to the designated virtual pick zones. As a result, the controller **104** is configured to assign the right autonomous mobile robot to the correct virtual pick zone to efficiently carry out the picking tasks. Moreover, such coordination is essential for optimizing the workflow within the warehouse **110** thereby ensuring that the picking process is streamlined and efficient.

Furthermore, the controller **104** is configured to communicate guidance instructions to the first wearable device **118A** worn by the first operator **116A** to guide the first operator **116A** to be available at the first virtual pick zone **112A.** The guidance instruction refers to a set of directions or commands communicated to the wearable device worn by each of the operators from the plurality of operators of the warehouse **110.** For example, the guidance information is communicated to the first wearable device **118A** worn by the first operator **116A,** and to the second wearable device worn by the second operator **116B.** In an implementation, the guidance instruction refers to an instruction that is used to perform a specific task or reach a particular location, such as location information, task details, timing data, and the like. The controller **104** is configured to send guidance instructions to the first wearable device **118A,** which is worn by the first operator **116A.** In addition, the controller **104** is configured to provide operator management as well as prevent supervision overheads. As a result, the controller **104** is configured to ensure that the first operator **116A** is in the correct location to assist with inventory picking, thus facilitating efficient collaboration between autonomous robots and human operators, such as between the first operator **116A** and the first autonomous mobile robot **114A.**

In accordance with an embodiment, the guidance instruction includes an expected time of arrival of the first autonomous mobile robot **114A** to the first virtual pick zone **112A** and a location of arrival of the first autonomous mobile robot **114A** to the first virtual pick zone **112A.** The controller **104** is configured to determine the expected time of arrival and the exact location between the plurality of virtual pick zones and the plurality of autonomous mobile robots. For example, the controller **104** is configured to determine the time of arrival of the first autonomous mobile robot **114A** to the first virtual pick zone **112A** and the location of the arrival of the first autonomous mobile robot **114A** in the first virtual pick zone **112A** so that the operator, such as the first operator **116A** can be instructed to be at the first virtual pick zone before the arrival of the first autonomous mobile robot **114A,** such as by communicating the guidance instruction to the first wearable device **118A** worn by the first operator **116A.** Moreover, the inclusion of the expected time of arrival and precise location in the guidance instructions ensures that the operator is prepared and in position when the first autonomous mobile robot **114A** arrives thereby minimizing the waiting time and enhancing coordination between the operators (i.e., the first operator **116A**) and the autonomous mobile robot (i.e., the first autonomous mobile robot **114A**), leading to more efficient task completion.

Furthermore, the controller **104** is configured to determine a pallet loading pattern indicative of a distribution of a plurality of inventory items in one or more cases and a stacking of the one or more cases in one or more layers on a pallet of the first autonomous mobile robot **114A** based on a set of criteria. Moreover, the set of criteria includes at least a first criterion of a case density with respect to an item crushability parameter. The controller **104** is configured to evaluate the set of criteria, such as the density of the cases and the crushability of the items, to create an optimal pallet loading pattern (i.e., a pallet loading plan). Moreover, such evaluation includes calculating the distribution and allocation of the plurality of inventory items on the pallet, ensuring that heavier and sturdier items are placed at the bottom and lighter, more fragile items are positioned at the top of the pallet. In an implementation, a palletization instruction logic that is used to deconstruct the order into packable pallets based on volumetric calculations, item density, tie high, and stackability and further communicates the same through visual cues thereby ensuring that the plurality of operators can easily stack a pallet without retouching the plurality of inventories. In addition, after the evaluation by the controller **104,** the loading pattern is then communicated to the first operator **116A** through the first wearable device **118A** to follow during the loading process. As a result, the pallet loading pattern indicative of the distribution of the plurality of inventory items in one or more cases and the stacking of the one or more cases in one or more layers on a pallet of the first autonomous mobile robot **114A** optimizes the space utilization and ensures the safety of the plurality of inventory items during transportation that helps the first operator **116A** to prevent any damage to the goods, maintain the integrity of the fragile items, and enhances the overall efficiency of the loading process.

In accordance with an embodiment, the controller **104** is further configured to determine the set of criteria that are specific for each pallet of each autonomous mobile robot of the plurality of autonomous mobile robots. The controller **104** is configured to analyze various factors and characteristics of the plurality of inventory items designated for each pallet, such as size, weight, fragility, compatibility with other items, and the like. Furthermore, the set of criteria is determined by the controller **104** to provide the optimal way of loading, stacking, and transporting the plurality of inventory items on that specific pallet. Therefore, by optimizing the loading pattern for each pallet, the controller **104** is configured to reduce the time and effort required for manual adjustments and increase the speed of operations. In addition, the determination of the set of criteria by the controller **104** is used to prevent accidents and damage by ensuring that items are loaded and transported in a manner that takes the unique characteristics into account and also allows more efficient use of space and weight capacity on each pallet, reducing the number of trips needed and conserving resources.

In accordance with an embodiment, the controller **104** is further configured to determine a pallet volume and a case volume for items to be picked, and a compatibility of the pallet volume and the case volume is a second criterion of the set of criteria. The second criterion is used to determine the loading pattern in order to check for any overhangs, wasted space, or imbalances that could affect the stability and safety of the inventory items placed on the pallet along with the pallet. Moreover, the second criterion, which is the determination of the compatibility between the pallet volume and the case volume is used to optimize space utilization, maintain balance, and prevent damage during the transportation of the plurality of inventory items thereby improving the overall efficiency of the inventory storage and handling processes within the warehouse **110.**

In accordance with an embodiment, the controller **104** is further configured to determine a case stacking height for each layer of the one or more cases on the pallet. Moreover, the case stacking height is a third criterion of the set of criteria. In an implementation, the controller **104** is configured to determine the optimal stacking height for each layer on the pallet by analyzing the dimensions, weight, and stability of the cases. Moreover, the determination of the correct case stacking height is used to maintain the structural integrity of the stacked items thereby optimizing the storage capacity and ensuring safe handling and transportation of the plurality of inventory items. In addition, the stacking height of the one or more cases is used to prevent damage to the one or more cases during warehouse operations.

In accordance with an embodiment, the controller **104** is further configured to determine a case layer width for each layer of the one more case on the pallet. Moreover, the case layer width is a fourth criterion of the set of criteria. The width for each layer of the one or more cases based on factors, such as the dimensions of the cases, the pallet size, and any operational constraints are used to maximize the use of pallet space while maintaining stability and accessibility of the plurality of inventory items. As a result, the controller **104** is configured to determine the case layer width that is further utilized for optimizing the arrangement of the one or more cases on the pallet of the first autonomous mobile robot **114A** thereby ensuring efficient space utilization, safe transportation, and storage of the warehouse operations.

Furthermore, the controller **104** is configured to generate and communicate a pick instruction based on the determined pallet loading pattern to the first wearable device **118A** worn by the first operator **116A** to pick one or more inventory items and place onto the pallet of the first autonomous mobile robot **114A** based on the determined pallet loading pattern. The communication of the pick instructions based on the determined pallet loading pattern is used to provide real-time guidance during the picking process to the first operator 116A. In other words, the controller **104** receives the order information from the warehouse management system **106.** Thereafter, the controller **104** is configured to communicate the guidance instructions to the first operator **116A** through the first wearable device **118A** in order to make the operator available at the time of arrival of the first autonomous mobile robot **114A.** After that, the controller **104** based on the set of criteria determines the loading pattern for the one or more cases from the plurality of inventory items. After that, the controller **104** is configured to generate the pick instruction and further communicate the same to the first operator **116A** through the first wearable device **118A.** Moreover, such communication allows the operator, for example, the first operator **116A** to load the pallet of the first autonomous mobile robot **114A** without damaging the one or more cases from the plurality of inventory items. As a result, by generating precise pick instructions, the controller **104** is configured to ensure accurate and efficient fulfillment of orders within the warehouse **110** with enhanced operational accuracy and supports seamless integration of human and automated workflows.

In accordance with an embodiment, the controller **104** is further configured to determine a center-of-mass and a total payload accumulated on each autonomous mobile robot of the plurality of autonomous mobile robots including the first autonomous mobile robot, and preconfigure a maximum speed, an acceleration, and a rotation torque for each autonomous mobile robot based on the detected center-of-mass and the total payload. In an example, the controller **104** is configured to determine the center-of-mass and the total payload accumulated on the first autonomous mobile robot **114A** and preconfigure the maximum speed, the acceleration, and the rotation torque for the first autonomous mobile robot **114A** based on the detected center-of-mass and the total payload. Similarly, the controller **104** is configured to determine the center-of-mass and the total payload accumulated on the n^{th} autonomous mobile robot **114N** and preconfigure the maximum speed, the acceleration, and the rotation torque for the n^{th} autonomous mobile robot **114N** based on the detected center-of-mass and the total payload. The controller **104** is configured to adjust the parameters, such as maximum speed to ensure safe handling, acceleration for efficient movement, and rotation torque for maneuverability, tailored to the specific load conditions of each of the plurality of autonomous mobile robots (e.g., the first autonomous mobile robot **114A,** the second autonomous mobile robot **114B,** up to the nth autonomous mobile robot **114N**) for optimizing the operational capabilities and safety of each of the plurality of autonomous mobile robot with efficient movement within the warehouse **110.**

In accordance with an embodiment, the controller **104** is further configured to adjust the maximum speed, acceleration, and rotation torque of each autonomous mobile robot from the plurality of autonomous mobile robots based on the real-time or near real-time changes in the center-of-mass as items are added to the pallet during the picking process. The controller **104** is configured to monitor the center-of-mass of the loaded pallet and dynamically updates the movement parameters of the robots to account for the shifting weight, ensuring balanced and controlled movement. In an implementation, the controller **104** is configured to determine the center of mass of the pallet based on the velocity of each of the plurality of autonomous mobile robots in order to load the pallet and accordingly adjust the velocity profile to ensure the stability of the system **102.** As a result, the controller **104** is configured to improve the stability and safety of the each of the plurality of autonomous mobile robots thereby preventing tipping or collisions and allowing for efficient and secure transportation of goods within the warehouse **110.**

In accordance with an embodiment, the controller **104** is further configured to generate a picking sequence indicative of one or more next pick locations in the first virtual pick zone **112A** or one or more next pick locations in a next virtual pick zone for the first autonomous mobile robot **114A** based on a set of cost factors. Moreover, the set of cost factors includes a bot distance cost, a picking cost, an operator travel cost, and a zone current cost. In an implementation, the controller **104** is configured to analyze the current state of the warehouse **110,** such as by utilizing real-time data and algorithms. Thereafter, the controller **104** is configured to calculate optimal paths for the plurality of autonomous mobile robots based on the specified cost factors. In an example, the set of cost factors includes the bot distance cost. Moreover, the bot distance cost refers to the amount of time and energy required for the each of the plurality autonomous mobile robots (e.g., the first autonomous mobile robot **114A,** the second autonomous mobile robot **114B,** up to the nth autonomous mobile robot **114N**) to travel between different locations within the warehouse **110.** In another example, the set of cost factors includes the picking cost. Moreover, the picking cost includes resources (e.g., time, labor, equipment, and the like) that are required to retrieve the plurality of inventory items from the storage locations in the warehouse **110.** In yet another example, the set of cost factors includes the operator travel cost. The operator travel cost refers to the time and effort required for the operators (e.g., the first operator **116A** up to the nth operator 116N) to move between different pick zones or aisles in the warehouse **110.** In an **implementation**, the set of cost factors includes the zone current cost. The zone current cost refers to the current operational load and efficiency of a specific pick zone within the warehouse **110.** The set of cost factors is used to ensure that the plurality of inventory items is picked in a sequence that minimizes overall travel distance, reduces operational time, and enhances the overall productivity of the system **102,** such as by prioritizing and streamlining the picking process.

In accordance with an embodiment, the controller **104** is further configured to monitor the progress of a plurality of picking tasks in the plurality of virtual pick zones in the warehouse **110** and adjust the assignment of the plurality of picking tasks to the plurality of autonomous mobile robots in a real-time or near real-time based on a bot operational state of the plurality of autonomous mobile robots and an operator operational state received from each of a plurality of wearable devices worn by a corresponding operator. The controller **104** is configured to receive information from the wearable devices worn by the plurality of operators, for example, the first wearable device **118A** worn by the first operator **116A** in order to determine the current status of each picking task and the overall workload distribution across the warehouse **110.** Moreover, the monitoring of the plurality of picking tasks is used to maintain the operational efficiency of the system **102,** such as by identifying bottlenecks or delays and taking corrective actions. As a result, by monitoring and adjusting task assignments based on real-time data, the controller **104** enhances operational efficiency, adapts to changing conditions, and ensures smooth workflow orchestration in warehouse environments.

In accordance with an embodiment, the controller **104** is further configured to determine picking paths and assignments based on the specific capabilities of each of the plurality of autonomous mobile robots including utilizing extended fork capabilities for picking multiple pallets or roll cages simultaneously. The controller **104** is configured to evaluate unique features for each robot, such as extended fork capabilities, and assigns tasks and routes that leverage the unique features of each of the plurality of autonomous mobile robots to handle multiple items simultaneously, thereby streamlining the picking process. In an implementation, the controller **104** is configured to identify the unique features for each of the autonomous mobile robot, such as the first autonomous mobile robot **114A** with varying technological capabilities that helps to unravel new use cases by utilizing the same software stack. For example, an autonomous mobile robot with extended fork can be configured to pick the one or more cases together and accordingly plan the pick path of each of the plurality of autonomous mobile robots to allow the plurality of autonomous mobile robots to provide a pallet agnostic solutions. As a result, the controller **104** is configured to optimize picking paths and assignments based on robot capabilities enhances efficiency, reduces travel time, and maximizes the use of available resources in the warehouse **110** thereby reducing overall picking time and improving throughput.

In accordance with an embodiment, the controller **104** is further configured to generate a plurality of picking paths for the plurality of autonomous mobile robots and a plurality of operators based on grouping orders based on the proximity and similarity of inventory items in different orders, determining a minimum number of consecutive aisles required to fulfill the grouped orders and enabling concurrent selection of multiple pallets or roll cages and minimizing a total travel distance and a total time required to complete a given picking task. Firstly, the controller **104** is configured to generate a plurality of picking paths for the plurality of autonomous mobile robots and a plurality of operators based on grouping orders based on the proximity and similarity of inventory items in different orders. Thereafter, the controller **104** is configured to determine the minimum number of consecutive aisles required to fulfill the grouped orders and enable concurrent selection of multiple pallets or roll cages. Furthermore, the controller **104** is configured to minimize the total travel distance and the total time required to complete a given picking task. The controller **104** is configured to analyze the order information in order to identify groups of orders with similar inventory item types or locations. In an implementation, the controller **104** is configured to calculate the optimal paths that each of the plurality of autonomous mobile robots and the plurality of operators should follow to fulfill the grouped orders efficiently. Moreover, such calculation includes the determination of the minimum number of consecutive aisles needed, enabling simultaneous selection of multiple pallets or roll cages, and optimizing the overall travel distance and time. As a result, by grouping orders based on proximity and similarity of inventory items, and considering aisle requirements and pallet handling capabilities, the controller **104** is configured to minimize travel distances and time spent on each picking task.

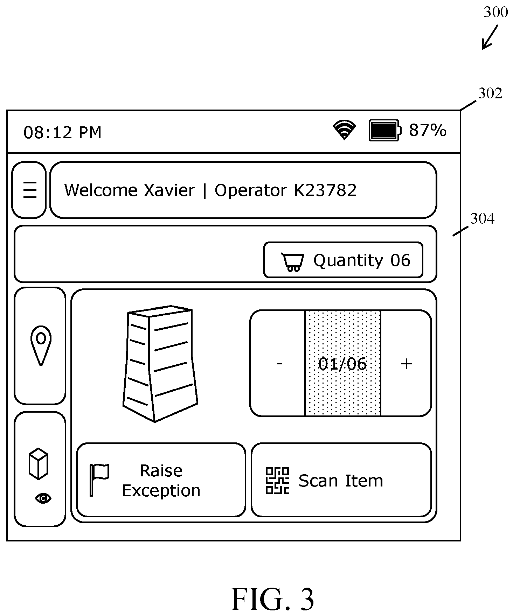

In accordance with an embodiment, the controller **104** is further configured to render a user interface (UI) on the first wearable device **118A** worn by the first operator **116A** to allow a user input corresponding to flagging the pallet for an audit using the UI when the first operator **116A** detects an anomaly during the picking process. When the first operator **116A** notices a discrepancy, such as damaged items, incorrect quantities, or misplaced products, then, in that case, the first operator **116A** is configured to utilize the UI of the wearable device worn by the first operator **116A** to input a specific command that marks the respective pallet for an audit and thereby ensure that any potential errors are promptly addressed and resolved. Example of the UI on the first wearable device **118A** worn by the first operator **116A** to allow a user input corresponding to flagging the pallet for an audit using the UI when the first operator **116A** detects an anomaly during the picking process is described and shown in detail in FIG. 3. As a result, the controller **104** is configured to handle reported anomalies thereby facilitating prompt investigation and resolution in order to ensure that rigorous quality control standards are maintained.

Advantageously, the system **102** of the warehouse Orchestration for inventory picking and fulfillment provides real-time or near real-time order processing and efficient distribution of tasks across the plurality of virtual pick zones in order to enhance order accuracy and speed. The system **102** effectively coordinates with the plurality of autonomous mobile robots and human operators, leading to optimized workflow and reduced bottlenecks. Moreover, by utilizing location data, and pre-defined pathways, the system **102** is configured to ensure precise navigation and task assignment for the plurality of autonomous mobile robots. Additionally, the controller **104** is configured to generate detailed pick instructions and pallet loading patterns based on the set of criteria thereby improving space utilization and preventing damage to the plurality of inventory items. The system **102** is configured to adjust the operational parameters of each of the autonomous mobile robots based on load conditions and continuously monitors picking tasks, making real-time adjustments to maintain efficiency with improved operational efficiency, safe handling of goods, and seamless collaboration between the plurality of autonomous mobile robots and human operators.

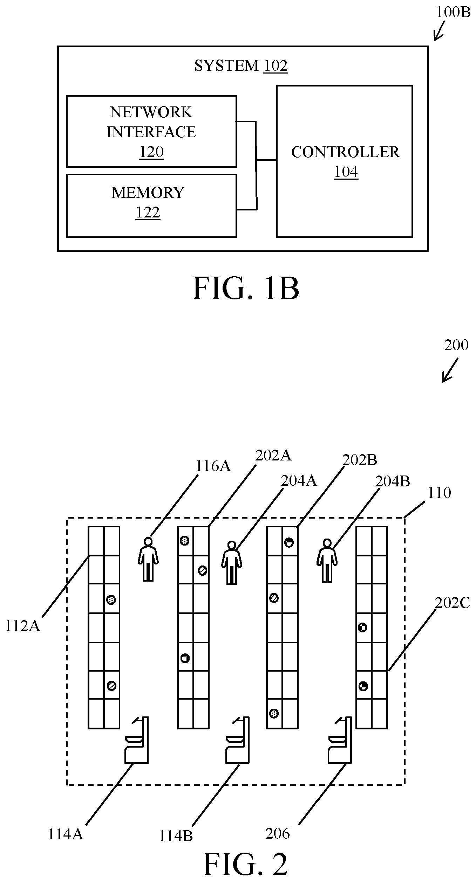

FIG. 1B is a block diagram that illustrates various exemplary components of a system, in accordance with an embodiment of the present disclosure. FIG. 1B is described in conjunction with elements from FIG. 1A. With reference to FIG. 1B, there is shown a block diagram **100B** that includes the system **102.** The system **102** includes the controller **104,** a network interface **120,** and a memory **122.**

The network interface **120** may include hardware or software that is configured to establish communication between the controller **104** and the memory **122.** Examples of the network interface **120** may include but are not limited to a computer port, a network socket, a network interface controller (NIC), and any other network interface device.

The memory **122** is configured to store the order information, such as the information related to orders, executions, inventory items, and the like that is received from the warehouse management system **106.** Examples of implementation of the memory **122** may include but are not limited to, Electrically Erasable Programmable Read-Only Memory (EEPROM), Dynamic Random-Access Memory (DRAM), Random Access Memory (RAM), Read-Only Memory (ROM), Hard Disk Drive (HDD), Flash memory, a Secure Digital (SD) card, Solid-State Drive (SSD), and/or CPU cache memory. Advantageously, the system **102** enables efficient communication and storage of order and the plurality of inventory data, enhancing the overall functionality and performance of the system **102** for warehouse Orchestration.

FIG. 2 is a diagram that illustrates a warehouse including a plurality of operators and a plurality of virtual pick zones, in accordance with an embodiment of the present disclosure. FIG. 2 is described in conjunction with elements from FIGs. 1A and 1B. With reference to FIG. 2, there is shown a diagram **200** that includes the warehouse **110** having the plurality of autonomous mobile robots (e.g., the first autonomous mobile robot **114A,** the second autonomous mobile robot **114B,** and a third autonomous mobile robot **206**), the plurality of virtual pick zones (e.g., the first virtual pick zone **112A** up to the nth virtual pick zone **112N**), and the plurality of operators (e.g., the first operator **116A** up to the nth operator **116N**).

In an implementation scenario, the warehouse **110** includes the plurality of virtual zones, such as the first virtual pick zone **112A** up to the nth virtual pick zone **112N** where the plurality of inventory items is stalked. The controller **104** of the system **102** cause the first autonomous mobile robot **114A** of the plurality of plurality of autonomous mobile robots to move to the first virtual pick zone **112A** of the plurality of virtual pick zones. Similarly, the other autonomous mobile robots, such as the second autonomous mobile robot **114B,** up to the nth autonomous mobile robot **114N** are caused by the controller **104** to move to the corresponding virtual pick zones, such as a second virtual pick zone **202A,** a third virtual pick zone **202B,** and a fourth virtual pick zone **202C** of the plurality of virtual pick zones. In addition, the plurality of autonomous mobile robots is configured to move to the plurality of virtual pick zone based on the plurality of inventory items that are required by the plurality of autonomous mobile robots to be loaded on the respective pallets based on the order information received by the controller **104** and the pallet loading pattern. Moreover, the plurality of operators, such as the first operator **116A** up to the nth operator **116N** are guided through the guidance instruction, which is communicated through the wearable devices worn by each of the plurality of operators. For example, the first wearable device **118A** is worn by the first operator **116A** to guide the first operator **116A** to be available at the first virtual pick zone **112A** through the guidance instructions sent by the controller **104.** Similarly, a second wearable device is worn by a second operator **204A,** and a third wearable device is worn by a third operator **204B** to be available at the first virtual pick zone **112A,** a second virtual pick zone **202A,** a third virtual pick zone **202B,** and a fourth virtual pick zone **202C** respectively through the guidance instructions sent by the controller **104.** Advantageously, the coordinated movements of the plurality of autonomous mobile robots and the plurality of operators enhances the operational efficiency, optimizes the task allocation, and improves the coordination between the plurality of operators and the plurality of autonomous robots.

FIG. 3 is a diagram that depict an exemplary user interface (UI) of a wearable device illustrating real-time or near real-time interaction of an operator with a controller of a system warehouse orchestration for inventory picking and fulfilment, in accordance with an embodiment of the present disclosure. FIG. 3 is described in conjunction with elements from FIGs. 1A, 1B, and 2. With reference to FIG. 3, there is shown a diagram **300** that depicts an exemplary illustration of a user interface (UI) **304** of a wearable device **302** worn by an operator to allow a user input corresponding to flagging the pallet for an audit using the UI **304** when the operator, such as the first operator **116A** detects an anomaly during the picking process.

In an exemplary scenario, with reference to FIG. 3, there is shown another exemplary illustration **300** that depicts the UI **304** of the wearable device **302** worn by one of the plurality of operators. For example, the UI of the first wearable device **118A** worn by the first operator **116A.** In an implementation, the wearable device **302** includes any device that is capable of displaying information in a human-readable format, such as a smart-watch, computer monitor, a tablet, or a smartphone that can be worn by each of the plurality of operators individually. The user interface **304** is a visual interface used to display any ongoing event related to the order information, plurality of inventory items, guidance instructions, and the pallet loading instruction. For example, the UI **304** displays the information, such as usemame, User ID, inventory ID, Inventory name, quantity, raise exception, scan item, location, and the like. In an implementation, the controller **104** is configured to render the UI **304** on the first wearable device **118A** worn by the first operator **116A** to allow user input corresponding to flagging the pallet for an audit using the UI **304** when the first operator **116A** detects an anomaly during the picking process in order to ensure that any discrepancies, such as damaged items, incorrect quantities, or misplaced products, are promptly addressed, maintaining high standards of accuracy and quality control in the warehouse operations. The operator, such as the first operator **116A,** upon noticing an anomaly, can use the UI **304** on the wearable device **302** to input specific command that marks the respective pallet for an audit, for example, raise exception command. Moreover, such input command triggers the controller **104** to flag the pallet for further inspection and resolution. Therefore, by enabling immediate anomaly reporting and flagging through the wearable device **302,** the system **102** facilitates prompt investigation and resolution of issues, ensuring rigorous quality control and minimizing disruptions in the picking process.

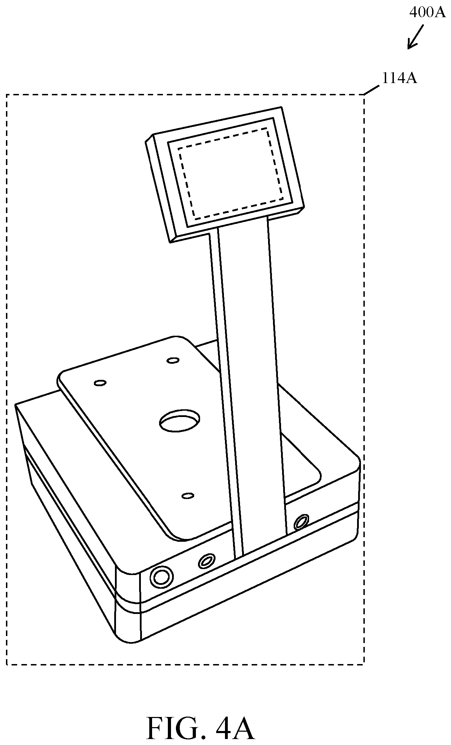

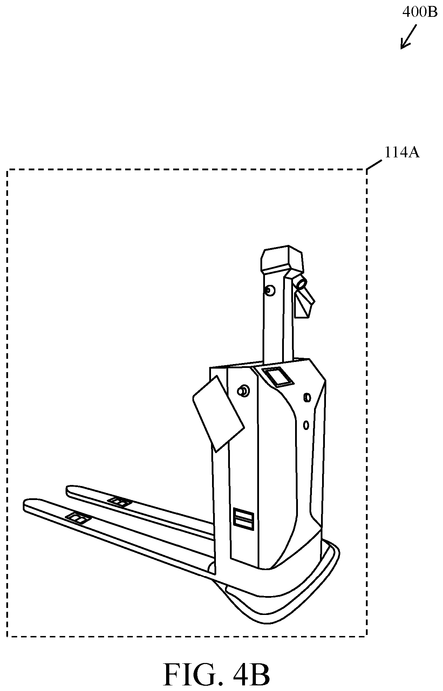

FIG. 4A and FIG. 4B illustrate an autonomous mobile robot equipped with a user interface (UI) screen and control mechanisms, in accordance with an embodiment of the present disclosure. With reference to FIG. 4A, there is shown a diagram **400A** that depicts an exemplary implementation of the first autonomous mobile robot **114A** that is configured to move to the plurality of virtual pick zones and allow the operators to load the pallet of the first autonomous mobile robot **114A** based on the pallet loading pattern. Furthermore, with reference to FIG. 4B, there is shown another implementation of the first autonomous mobile robot **114A** that includes extended forks configured to load one or more inventory items based on the order information received from the warehouse management system **106.**

In an implementation scenario, each of the plurality of autonomous mobile robot, such as the first autonomous mobile robot **114A** is used for warehouse operations in order to assist the plurality of operators with tasks, such as picking, transporting, and managing inventory items. The controller **104** is configured to cause the first autonomous mobile robot **114A** from the plurality of plurality of autonomous mobile robots to move to the first virtual pick zone **112A** of the plurality of virtual pick zones. The first autonomous mobile robot **114A** is configured to boost the overall productivity of the system **102** through reduced operator walking time, improved picking ergonomics, and enhanced employee satisfaction at minimal cost. The system **102** allows a fast ramp-up and go-live within days or weeks without the need for extensive operator training, fencing, or barcode downtime and also provides a quick payback period and high return on investment (ROI), with the expected total cost of ownership (TCO) reduction ranging from 25% to 40%. Additionally, the system **102** is configured to handle multiple types of pallets within the warehouse **110** thereby accommodating diverse operational needs.

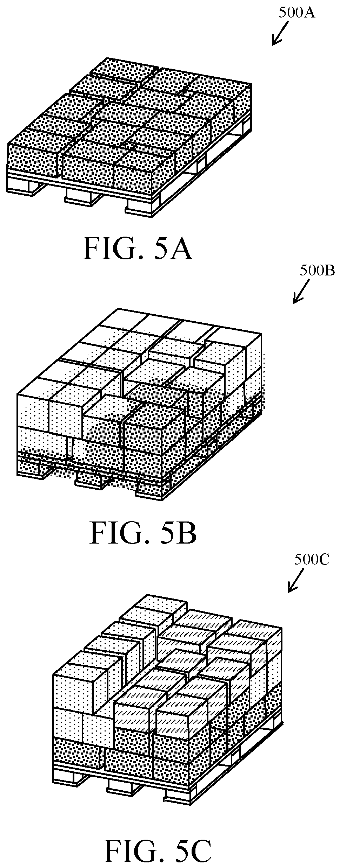

FIGs. 5A, 5B, and 5C are diagrams that illustrate a process of layering and palletization in a warehouse management system for optimized inventory picking and fulfillment, in accordance with an embodiment of the present disclosure. With reference to FIG. 5A, there is shown a diagram **500A** that depicts an initial layer of the one or more inventory items placed on a pallet of the first autonomous mobile robot **114A** from the plurality of autonomous mobile robots. Furthermore, with reference to FIG. 5B, there is shown a diagram **500B** that depicts an addition of a second layer of one or more inventory items that are placed on the initial layer of the one or more inventory items. In addition, with reference to FIG. 5C, there is shown a diagram **500C** that depicts a third layer of one or more inventory items that are placed on the second layer of inventory items, completing the pallet load.

In an implementation scenario, the controller **104** of the system **102** is configured to determine a pallet loading pattern indicative of a distribution of the plurality of inventory items in one or more cases and a stacking of the one or more cases in one or more layers, such as the initial layer, the second layer, and the third layer on the pallet of the first autonomous mobile robot **114A.** The operator, such as the first operator **116A** is instructed to load the pallet of the first autonomous mobile robot **114A** with one or more inventory items according to the loading pattern, which is determined by the controller **104** based on the set of criteria, such as a pallet and case volume, a case density and an item crushability, a case stacking height for each layer, a case layer width for each layer, and the like thereby ensuring that the heavier items are at the bottom and lighter, more fragile items are on top. Additionally, the placement of one or more case of the one or more inventory items provides an optimized space utilization thereby ensuring the safety of the plurality of inventory items during transport and enhances overall loading efficiency.

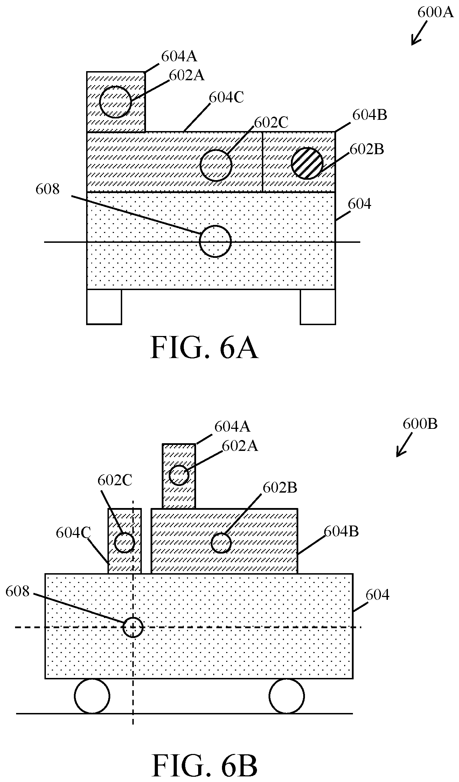

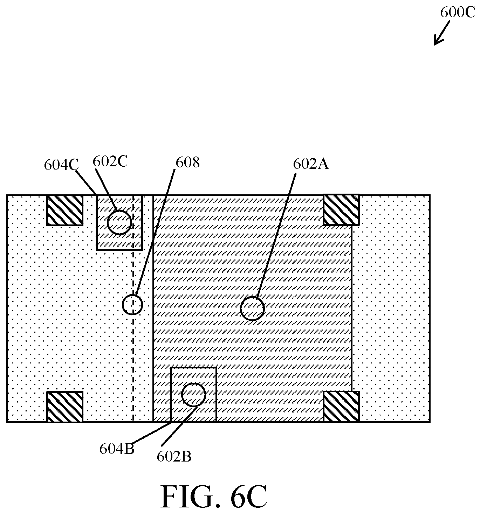

FIGs. 6A, 6B, and 6C are diagrams that illustrate different configurations of items loaded on an autonomous mobile robot based on center of mass, in accordance with an embodiment of the present disclosure. With reference to FIG. 6A there is shown a diagram **600A** of a side view of the first autonomous mobile robot **114A.** Similarly, with reference to FIG. 6B, there is shown a diagram **600B** of a front view of the first autonomous mobile robot **114A** and with reference to FIG. 6C, there is shown a diagram **600C** of a top view of the first autonomous mobile robot **114A** with one or more inventory items placed on the pallet.

In an exemplary scenario, the controller **104** is configured to determine the center of mass for each of the one or more inventory items, such as a first center of mass **602A** of a first inventory item **604A,** a second center of mass **602B** of a second inventory item **604B,** and a third center of mass **602C** of a third inventory item **604C** loaded on the first autonomous mobile robot **114A** along with the center of mass **608** of a pallet **606.** In an implementation, the controller **104** is configured to determine a center-of-mass and a total payload accumulated on each autonomous mobile robot of the plurality of autonomous mobile robot including the first autonomous mobile robot and preconfigure a maximum speed, an acceleration, and a rotation torque for each autonomous mobile robot based on the detected center-of-mass and the total payload. As a result, by monitoring and adjusting for the center of mass and payload, the controller **104** is configured to optimize the performance of the first autonomous mobile robot **114A** and ensure safe transport of the loaded one or more inventory items.

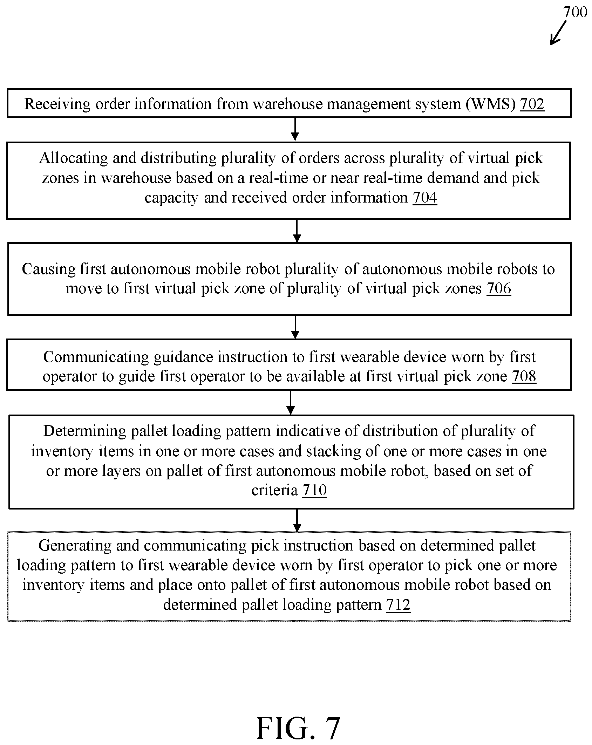

FIG. 7 is a flowchart of a method of warehouse orchestration for inventory picking and fulfilment, in accordance with an embodiment of the present disclosure. FIG. 7 is described in conjunction with elements from FIGs. 1A, 1B, up to 6. With reference to FIG. 7, there is shown a flowchart of a method **700** that includes the steps **702**-to-**712.** The controller **104** (of FIG. 1A) is configured to execute the method **700.**

There is provided the method **700** of warehouse orchestration for inventory picking and fulfilment. The method **700** is used to provide a real-time or near real-time order processing and distribution with efficient allocation and management of orders across the plurality of virtual pick zones. Furthermore, the method **700** is used to establish an improved and reliable coordination of the plurality of autonomous mobile robots and human operators to enhance the operational efficiency of the warehouse **110** along with safe and efficient stacking.

At **702,** the method **700** includes receiving order information from a warehouse management system **106.** The order information received by the controller **104** from the warehouse management system **106** should include information associated with the order, such as order ID, customer information, product details, quantity, inventory location, priority level, delivery date, handling instructions, and the like. The retrieval of the order information from the warehouse management system **106** is used to ensure that the plurality of orders that are to be fulfilled through the warehouse **110** can be fulfilled accurately and efficiently.

At **704,** the method **700** includes allocating and distributing a plurality of orders across a plurality of virtual pick zones in the warehouse **110** based on a real-time or near real-time demand and pick capacity and the received order information. As a result, the method 700 is used to optimize the workflow, reducing bottlenecks, and improving the overall operational efficiency of the warehouse.

At **706,** the method **700** includes causing the first autonomous mobile robot **114A** of a plurality of plurality of autonomous mobile robots to move to a first virtual pick zone **112A** of the plurality of virtual pick zones. The assignment of the right autonomous mobile robot to the correct virtual pick zone to efficiently carry out the picking tasks. Moreover, such coordination is essential for optimizing the workflow within the warehouse **110** thereby ensuring that the picking process is streamlined and efficient.

At **708,** the method **700** includes communicating a guidance instruction to the first wearable device **118A** worn by the first operator **116A** to guide the first operator **116A** to be available at the first virtual pick zone **112A.** The communication of the guidance instruction to the first wearable device **118A** is used to ensure that the first operator **116A** is in the correct location to assist with inventory picking, thus facilitating efficient collaboration between autonomous robots and human operators, such as between the first operator **116A** and the first autonomous mobile robot **114A.**

At **710,** the method **700** includes determining a pallet loading pattern indicative of a distribution of a plurality of inventory items in one or more cases and a stacking of the one or more cases in one or more layers on a pallet of the first autonomous mobile robot **114A,** based on the set of criteria. Moreover, the set of criteria includes at least a first criterion of a case density with respect to an item crushability parameter. The pallet loading pattern indicative of the distribution of the plurality of inventory items in one or more cases and the stacking of the one or more cases in one or more layers on a pallet of the first autonomous mobile robot **114A** optimizes the space utilization and ensures the safety of the plurality of inventory items during transportation that helps the first operator **116A** to prevent any damage to the goods, maintain the integrity of the fragile items, and enhances the overall efficiency of the loading process.

In accordance with an embodiment, the method **700** includes determining, by the controller **104** a pallet volume and a case volume for items to be picked, wherein a compatibility of the pallet volume and the case volume is a second criterion of the set of criteria. The second criterion is used to determine the loading pattern in order to check for any overhangs, wasted space, or imbalances that could affect the stability and safety of the inventory items placed on the pallet along with the pallet. Moreover, the second criterion, which is the determination of the compatibility between the pallet volume and the case volume is used to optimize space utilization, maintain balance, and prevent damage during the transportation of the plurality of inventory items thereby improving the overall efficiency of the inventory storage and handling processes within the warehouse **110.**

In accordance with an embodiment, the method **700** includes determining by the controller **104,** a case stacking height for each layer of the one or more cases on the pallet, wherein the case stacking height is a third criterion of the set of criteria. In an implementation, the controller **104** is configured to determine the optimal stacking height for each layer on the pallet by analyzing the dimensions, weight, and stability of the cases. Moreover, the determination of the correct case stacking height is used to maintain the structural integrity of the stacked items thereby optimizing the storage capacity and ensuring safe handling and transportation of the plurality of inventory items. In addition, the stacking height of the one or more cases is used to prevent damage to the one or more cases during warehouse operations.

In accordance with an embodiment, the method **700** includes determining, by the controller **104,** a case layer width for each layer of the one more cases on the pallet, wherein the case layer width is a fourth criterion of the set of criteria. The width for each layer of the one or more cases based on factors, such as the dimensions of the cases, the pallet size, and any operational constraints are used to maximize the use of pallet space while maintaining stability and accessibility of the plurality of inventory items. As a result, the method 700 is used to determine the case layer width that is further utilized for optimizing the arrangement of the one or more cases on the pallet of the first autonomous mobile robot **114A** thereby ensuring efficient space utilization, safe transportation, and storage of the warehouse operations.

At **712,** the method **700** includes generating and communicating a pick instruction based on the determined pallet loading pattern to the first wearable device **118A** worn by the first operator **116A** to pick one or more inventory items and place onto the pallet of the first autonomous mobile robot **114A** based on the determined pallet loading pattern. The communication of the pick instructions based on the determined pallet loading pattern is used to provide real-time guidance during the picking process to the first operator **116A.** As a result, by generating precise pick instructions, the controller **104** is configured to ensure accurate and efficient fulfillment of orders within the warehouse **110** with enhanced operational accuracy and supports seamless integration of human and automated workflows.

In accordance with an embodiment, the method **700** includes determining, by the controller **104,** a center-of-mass and a total payload accumulated on each autonomous mobile robot of the plurality of autonomous mobile robot including the first autonomous mobile robot and preconfiguring, by the controller **104,** a maximum speed, an acceleration, and a rotation torque for each autonomous mobile robot based on the detected center-of-mass and the total payload. In an example, the controller **104** is configured to determine the center-of-mass and the total payload accumulated on the first autonomous mobile robot **114A** and preconfigure the maximum speed, the acceleration, and the rotation torque for the first autonomous mobile robot **114A** based on the detected center-of-mass and the total payload. Similarly, the controller **104** is configured to determine the center-of-mass and the total payload accumulated on the n^{th} autonomous mobile robot **114N** and preconfigure the maximum speed, the acceleration, and the rotation torque for the n^{th} autonomous mobile robot **114N** based on the detected center-of-mass and the total payload. The controller **104** is configured to adjust the parameters, such as maximum speed to ensure safe handling, acceleration for efficient movement, and rotation torque for maneuverability, tailored to the specific load conditions of each of the plurality of autonomous mobile robots (e.g., the first autonomous mobile robot **114A,** the second autonomous mobile robot **114B,** up to the nth autonomous mobile robot **114N**) for optimizing the operational capabilities and safety of each of the plurality of autonomous mobile robot with efficient movement within the warehouse **110.**

In accordance with an embodiment, the method **700** includes monitoring, by the controller **104,** a progress of a plurality of picking tasks in the plurality of virtual pick zones in the warehouse and adjusting, by the controller, assignment of the plurality of picking tasks to the plurality of autonomous mobile robots in a real-time or near real-time based on a bot operational state of the plurality of autonomous mobile robots and an operator operational state received from each of a plurality of wearable devices worn by a corresponding operator. As a result, by monitoring and adjusting task assignments based on real-time data, the controller **104** enhances operational efficiency, adapts to changing conditions, and ensures smooth workflow orchestration in warehouse environments.

In accordance with an embodiment, the method **700** includes generating, by the controller **104,** a picking sequence indicative of one or more next pick locations in the first virtual pick zone or one or more next pick locations in a next virtual pick zone for the first autonomous mobile robot based on a set of cost factors, and wherein the set of cost factors comprises a bot distance cost, a picking cost, an operator travel cost, and a zone current cost. The zone current cost refers to the current operational load and efficiency of a specific pick zone within the warehouse **110.** The set of cost factors is used to ensure that the plurality of inventory items is picked in a sequence that minimizes overall travel distance, reduces operational time, and enhances the overall productivity of the system **102,** such as by prioritizing and streamlining the picking process.

Advantageously, the method **700** of the warehouse Orchestration for inventory picking and fulfillment provides real-time or near real-time order processing and efficient distribution of tasks across the plurality of virtual pick zones in order to enhance order accuracy and speed. The method 700 effectively coordinates with the plurality of autonomous mobile robots and human operators, leading to optimized workflow and reduced bottlenecks. Moreover, by utilizing location data, and pre-defined pathways, the system **102** is configured to ensure precise navigation and task assignment for the plurality of autonomous mobile robots. Additionally, the controller **104** is configured to generate detailed pick instructions and pallet loading patterns based on the set of criteria thereby improving space utilization and preventing damage to the plurality of inventory items. The system **102** is configured to adjust the operational parameters of each of the autonomous mobile robots based on load conditions and continuously monitors picking tasks, making real-time adjustments to maintain efficiency with improved operational efficiency, safe handling of goods, and seamless collaboration between the plurality of autonomous mobile robots and human operators.

Certain embodiments of the disclosure may be found in a system of warehouse management for replenishing and picking inventory in the forward pick area **104.** Various embodiments of the disclosure may provide the system that includes the warehouse management server **108.** While the present disclosure is described with reference to certain embodiments, it will be understood by those skilled in the art that various changes may be made, and equivalents may be substituted without departing from the scope of the present disclosure. Additionally, many modifications may be made to adapt a particular situation or material to the teachings of the present disclosure without departing from its scope. Therefore, it is intended that the present disclosure is not limited to the particular embodiment disclosed, but that the present disclosure will include all embodiments that fall within the scope of the appended claims. Equivalent elements, materials, processes, or steps may be substituted for those representatively illustrated and described herein. Moreover, certain features of the disclosure may be utilized independently of the use of other features, all as would be apparent to one skilled in the art after having the benefit of this description of the disclosure.

As used herein, the terms "comprises," "comprising," "includes," "including," "has," "having" or any contextual variants thereof, are intended to cover a non-exclusive inclusion. For example, a process, product, article, or apparatus that comprises a list of elements is not necessarily limited to only those elements but may include other elements not expressly listed or inherent to such process, product, article, or apparatus. Further, unless expressly stated to the contrary, "or" refers to an inclusive or and not to an exclusive or. For example, a condition "A or B" is satisfied by any one of the following: A is true (or present), and B is false (or not present), A is false (or not present) and B is true (or present), and both A and B is true (or present).

Although the steps, operations, or computations may be presented in a specific order, this order may be changed in different embodiments. In some embodiments, to the extent multiple steps are shown as sequential in this specification, some combination of such steps in alternative embodiments may be performed at the same time. The sequence of operations described herein can be interrupted, suspended, reversed, or otherwise controlled by another process. It will also be appreciated that one or more of the elements depicted in the drawings/figures can also be implemented in a more separated or integrated manner, or even removed or rendered as inoperable in certain cases, as is useful in accordance with a particular application.

## Claims

1. A system of warehouse orchestration for inventory picking and fulfillment, the system comprising:
a controller configured to:
receive order information from a warehouse management system;
allocate and distribute a plurality of orders across a plurality of virtual pick zones in a warehouse based on a real-time or near real-time demand and pick capacity and the received order information;
cause a first autonomous mobile robot of a plurality of plurality of autonomous mobile robots to move to a first virtual pick zone of the plurality of virtual pick zones;
communicate a guidance instruction to a first wearable device worn by a first operator to guide the first operator to be available at the first virtual pick zone; and
determine a pallet loading pattern indicative of a distribution of a plurality of inventory items in one or more cases and a stacking of the one or more cases in one or more layers on a pallet of the first autonomous mobile robot, based on a set of criteria, wherein the set of criteria comprises at least a first criterion of a case density with respect to an item crushability parameter; and
generate and communicate a pick instruction based on the determined pallet loading pattern to the first wearable device worn by the first operator to pick one or more inventory items and place onto the pallet of the first autonomous mobile robot based on the determined pallet loading pattern.

2. The system according to claim 1, wherein the guidance instruction comprises an expected time of arrival of the first autonomous mobile robot to the first virtual pick zone and a location of arrival of the first autonomous mobile robot in first virtual pick zone.

3. The system according to claim 1, wherein the controller is further configured to determine the set of criteria that are specific for each pallet of each autonomous mobile robot of the plurality of plurality of autonomous mobile robots.

4. The system according to claim 1, wherein the controller is further configured to determine a pallet volume and a case volume for items to be picked, wherein a compatibility of the pallet volume and the case volume is a second criterion of the set of criteria,
wherein the controller is further configured to determine a case stacking height for each layer of the one or more cases on the pallet, wherein the case stacking height is a third criterion of the set of criteria, and
wherein the controller is further configured to determine a case layer width for each layer of the one more cases on the pallet, wherein the case layer width is a fourth criterion of the set of criteria.

5. The system according to claim 1, wherein the controller is further configured to:
determine a center-of-mass and a total payload accumulated on each autonomous mobile robot of the plurality of autonomous mobile robot including the first autonomous mobile robot; and
preconfigure a maximum speed, an acceleration, and a rotation torque for each autonomous mobile robot based on the detected center-of-mass and the total payload,
wherein the controller is further configured to adjust the maximum speed, acceleration, and rotation torque of each autonomous mobile robot from the plurality of autonomous mobile robots based on the real-time or near real-time changes in the center-of-mass as items are added to the pallet during the picking process.

6. The system according to claim 1, wherein the controller is further configured to generate a picking sequence indicative of one or more next pick locations in the first virtual pick zone or one or more next pick locations in a next virtual pick zone for the first autonomous mobile robot based on a set of cost factors, and wherein the set of cost factors comprises a bot distance cost, a picking cost, an operator travel cost, and a zone current cost.

7. The system according to claim 1, wherein the controller is further configured to monitor a progress of a plurality of picking tasks in the plurality of virtual pick zones in the warehouse and adjust assignment of the plurality of picking tasks to the plurality of autonomous mobile robots in a real-time or near real-time based on a bot operational state of the plurality of autonomous mobile robots and an operator operational state received from each of a plurality of wearable devices worn by a corresponding operator.

8. The system according to claim 7, wherein the controller is further configured to determine picking paths and assignments based on the specific capabilities of each of the plurality of autonomous mobile robots including utilizing extended fork capabilities for picking multiple pallets or roll cages simultaneously.

9. The system according to claim 1, wherein the controller is further configured to generate a plurality of picking paths for the plurality of autonomous mobile robots and a plurality of operators based on:
grouping orders based on a proximity and similarity of inventory items in different orders,
determining a minimum number of consecutive aisles required to fulfill the grouped orders; and
enabling concurrent selection of multiple pallets or roll cages; and
minimizing a total travel distance and a total time required to complete a given picking task.

10. The system according to claim 1, wherein the controller is further configured to render a user interface (UI) on the first wearable device worn by the first operator to allow a user input corresponding to flagging the pallet for an audit using the UI when the first operator detects an anomaly during the picking process.

11. A method of warehouse orchestration for inventory picking and fulfilment, the method comprising:
receiving, by a controller, order information from a warehouse management system;
allocating and distributing, by the controller, a plurality of orders across a plurality of virtual pick zones in a warehouse based on a real-time or near real-time demand and pick capacity and the received order information;
causing, by the controller, a first autonomous mobile robot of a plurality of plurality of autonomous mobile robots to move to a first virtual pick zone of the plurality of virtual pick zones;
communicating, by the controller, a guidance instruction to a first wearable device worn by a first operator to guide the first operator to be available at the first virtual pick zone; and
determining, by the controller, a pallet loading pattern indicative of a distribution of a plurality of inventory items in one or more cases and a stacking of the one or more cases in one or more layers on a pallet of the first autonomous mobile robot, based on a set of criteria, wherein the set of criteria comprises at least a first criterion of a case density with respect to an item crushability parameter; and
generating and communicating, by the controller, a pick instruction based on the determined pallet loading pattern to the first wearable device worn by the first operator to pick one or more inventory items and place onto the pallet of the first autonomous mobile robot based on the determined pallet loading pattern.

12. The method according to claim 11, further comprising
determining, by the controller, a pallet volume and a case volume for items to be picked, wherein a compatibility of the pallet volume and the case volume is a second criterion of the set of criteria;
determining, by the controller, a case stacking height for each layer of the one or more cases on the pallet, wherein the case stacking height is a third criterion of the set of criteria; and
determining, by the controller, a case layer width for each layer of the one more cases on the pallet, wherein the case layer width is a fourth criterion of the set of criteria.

13. The method according to claim 11, further comprising:
determining, by the controller, a center-of-mass and a total payload accumulated on each autonomous mobile robot of the plurality of autonomous mobile robot including the first autonomous mobile robot; and
preconfiguring, by the controller, a maximum speed, an acceleration, and a rotation torque for each autonomous mobile robot based on the detected center-of-mass and the total payload.

14. The method according to claim 11, further comprising generating, by the controller, a picking sequence indicative of one or more next pick locations in the first virtual pick zone or one or more next pick locations in a next virtual pick zone for the first autonomous mobile robot based on a set of cost factors, and wherein the set of cost factors comprises a bot distance cost, a picking cost, an operator travel cost, and a zone current cost.

15. The method according to claim 11, further comprising monitoring, by the controller, a progress of a plurality of picking tasks in the plurality of virtual pick zones in the warehouse and adjusting, by the controller, assignment of the plurality of picking tasks to the plurality of autonomous mobile robots in a real-time or near real-time based on a bot operational state of the plurality of autonomous mobile robots and an operator operational state received from each of a plurality of wearable devices worn by a corresponding operator.
